# EUROPEAN PATENT APPLICATION

(11) **EP 3 348 178 A1**
(43) Date of publication of application: **18.07.2018**
(21) Application number: 17208787.6
(22) Date of filing: 20.12.2017
(51) Int. Cl.: A47J 36/00, A47J 36/16, A23L 7/174, A23L 7/187

(54) **POPPER AND METHODS FOR EXPANDING EXPANDABLE FOODS**

(30) Priority: 16.01.2017 GB 201700720
(71) Applicant: Polar Systems Limited, King's Lynn, Norfolk PE30 4LA (GB)
(72) Inventor: GAMBLE, Peter John, King's Lynn, Norfolk PE30 4LA (GB)
(74) Representative: ip21 Ltd

(57) **Abstract**

A popper comprises a kettle incorporating a popping chamber; one or more inlets for the introduction of an expandable food into said popping chamber; the popper further comprising a burner for generating thermal energy, and the popper further comprising a heat exchanger for transferring said thermal energy to the popping chamber; and wherein the heat exchanger is configured to space apart the popping chamber from said burner.

## Description

### Field of the Invention

The invention relates generally to cookers and poppers for popping or otherwise expanding expandable foods. The invention relates more specifically to popcorn production and, in particular, popcorn production for pre-packed popcorn.

### Background to the Invention

The closest prior art known to the Applicant are popping machines for large-scale pre-packed popcorn production. In other words, such popping machines are not typically employed for use on-site, e.g. smaller-scale production in a cinema or for personal use in the home.

Existing popping machines typically comprise a kettle and an electrical heat source which is thermally coupled to the kettle and actuated to heat and expand popcorn kernels retained inside the kettle. The electrical heat source typically comprises several coils, relays or resistance heating elements arranged, usually underneath the kettle, to heat the kettle and its contents. A control mechanism may be provided which incorporates an on/off switch for switching the popper from an OFF state (i.e. a cold state), to an ON state (i.e. a heated, popping state) and vice versa. A more complex switch with a number of heat settings to choose between may also be provided, which switches the popper between one of a plurality of heating rates.

However, existing popping machines suffer from a number of disadvantages which are associated particularly with their electrical heating mechanisms and the configurations of existing gas heating mechanisms. The coils comprising electrical heating elements are arranged underneath the kettle as a series of rings to heat one or more zones in the kettle, each zone potentially having a different temperature. The arrangement of coils typically and undesirously provides hot spots and areas of insufficient heat on the popping surface. Because of this configuration, it is difficult to achieve an even heat inside the kettle. Gas heated kettles also suffer from such disadvantages. Uneven heat inevitably causes some kernels to pop much faster than others, leading to burnt popcorn, unpopped kernels, or both. It is desirous to provide a popper which provides a more even and controllable heat to optimise popping results.

Although electrical kettles are traditionally considered a safer way to cook, the heating element of existing machines, i.e. the electrical coils, is located directly below the kettle and is thus in close proximity to any oil, or any other heat transfer medium, inside the kettle. The risk of ignition of the oil is therefore increased because of this close proximity. It is desirous to provide an apparatus in which these components are not in such close proximity to one another. These disadvantages also relate to gas heated kettles because, typically, an open flame is in close proximity to the oil. Further disadvantages of existing gas heated kettles are the risks of unhealthy exhaust gasses entering the environment surrounding the popping machine, or damage to the machine, such as cracking pans, due to excess heat on a particular area of the kettle. It is thus an objective of certain embodiment of the invention to alleviate at least some of these disadvantages.

The following prior art documents have been identified but do not appear to be particularly relevant:
DE3516393 (Villamosipari & Keripar) provides a prior art example of a cooking vessel which has a fossil fuel burner in close proximity to a water filled chamber which itself selectively heated by either an electrical resistance or the fossil fuel burner.

CN203539095U (Shenzhen SA VEGAS ENERGY SAVING TECHNOLOGY) concerns an energy-saving soup bucket employs a gas burner located in close proximity to the soup bucket.

US2011/0247503 (Baker) discloses a blower where burning gases emanating from a gas burner jets are directed toward a kettle and contained by the housing. The temperature and velocity of the burning gases are enhanced by action of a blower which blows air which mixes with flammable gas in the gas burner prior to burning.

US6,234,064 (Turrel) concerns a cooker for popcorn or the like which has a burner in close proximity to the kettle for direct heating of the kettle.

US2,595,527 (Kells & Miller) concerns an apparatus for heating materials with a vessel and a jacket. A burner is provided below the jacket for heating a liquid in a hermetically sealed space.

### Summary of the Invention

In a first broad independent aspect, the invention provides a popper comprising a kettle incorporating a popping chamber; one or more inlets for the introduction of an expandable food into said popping chamber; the popper further comprising a burner for generating thermal energy, and the popper further comprising a heat exchanger for transferring said thermal energy to the popping chamber; and wherein the heat exchanger is configured to space apart the popping chamber from said burner; wherein said heat exchanger comprises a hot gas chamber; wherein said burner heats a gaseous medium which, in use, enters said hot gas chamber to heat the popping chamber.

This configuration is particularly advantageous because the popper provides a means for popping an expandable food, such as popcorn, in a more effective and controlled manner. The structure of the popper, namely the gas burner and heat exchanger being spaced apart from the popping chamber, reduces the risk of igniting the heat transfer medium within the popping chamber, thereby improving safety. Usually, ignition of an unwanted fire is caused by the build-up of oil (or another heat transfer medium) on the exterior of a kettle, for example from waste oil running off in the cooking process. This oil can collect at hot zones and can ignite. The means of heating the popping chamber and the structure of the popper also provides a more even heat across the popping chamber. More evenly heating the popping chamber reduces the risk that some food within the popping chamber will become overcooked or burnt whilst, at the same time, other food in the popping chamber is undercooked or unexpanded. Heating the popping chamber more evenly and consistently reduces the need for additional monitoring or agitating components. The gas burner also allows the heat within the popping chamber to be more effectively modulated, rather than providing only an on/off heating function. Therefore, specific temperatures can be pre-programmed to suit the tolerance and optimum cooking of a particular ingredient.

Furthermore, the structure of the popper, in particular the spacing of the gas burner and heat exchanger from the popping chamber results in the components being more easily removed and maintained without complete disassembly of the popper. The burner is external from the kettle and its guarding, so that the burner can be serviced without the kettle guarding being removed. Downtime when the popper is in need of maintenance or repair is thereby minimised.

In a subsidiary aspect, said burner is a gas burner and the heat exchanger comprises a hot gas chamber; wherein said gas burner produces exhaust gas which, in use, enters said hot gas chamber to heat the popping chamber. This configuration is particularly advantageous because the exhaust gas produced by the gas burner enters the hot gas chamber of the heat exchanger to efficiently and effectively heat the popping chamber. The exhaust gas produced by the gas burner more evenly heats the popping chamber via the hot gas chamber.

In a subsidiary aspect, said hot gas chamber is located at least substantially below said popping chamber. Locating the hot gas chamber at least substantially below the popping chamber improves the efficiency with which the popping chamber is heated.

In a subsidiary aspect, said gas burner is spaced from said hot gas chamber by a conduit and said conduit extends such that said gas burner is located outside the perimeter of the hot gas chamber and popping chamber. This configuration is particularly advantageous because the gas burner (and flame) is located remotely from the hot gas chamber and popping chamber. The risk of igniting the heat transfer medium inside the popping chamber is therefore minimised.

In a subsidiary aspect, said popper comprises one or more exhausts for facilitating the removal of expended gas from the popper. The one or more exhausts efficiently remove expended gas from the popper so as not to reduce the effectiveness of the kettle or to negatively affect the flavour of the expanded food.

In a subsidiary aspect, the popper comprises at least two exhausts configured to remove gas from multiple temperature zones within the hot gas chamber. The temperature within the hot gas chamber of the heat exchanger may vary over several areas or zones. Providing at least two exhausts configured to remove gas from multiple temperature zones ensures the temperature within the heat exchanger and therefore the popping chamber can be more effectively controlled.

In a subsidiary aspect, the popper further comprises an agitator for, in use, agitating the expandable food inside the popping chamber. The agitator minimises the risk that food will become stuck to the bottom of the popping chamber or burn. In the case of popping popcorn kernels, the agitator will agitate unpopped and popped kernels inside the popping chamber so that unpopped kernels fall to the bottom of the popping chamber and popped kernels rise above the unpopped kernels so as not to burn or stick on the bottom of the popping chamber. The agitator also improves the efficiency with which expanded food can be removed from the popping chamber into a container such as a hopper.

In a subsidiary aspect, said agitator comprises a stirrer and a motor for actuating the movement of said stirrer inside the popping chamber. The stirrer and motor improve the efficacy with which food inside the popping chamber can be stopped from burning.

In a subsidiary aspect, said popper further comprises a frame which is attached to and houses said kettle. The popper is configured for industrial-scale popping of expandable foods, such as pre-packed popped popcorn. The frame of the popper improves the stability of the kettle during use and facilitates movement of the kettle to make filling, heating and emptying the kettle more straightforward.

In a subsidiary aspect, said frame comprises an extractor lid for extracting gas and/or vapour from the kettle. The extractor lid improves the speed and efficiency with which gases and/or vapours can be removed from the kettle so that the flavour of the food inside and around the popper is not negatively affected.

In a subsidiary aspect, said kettle comprises a lid, and wherein said lid comprises an opening to enable the exit of an expanded food from the popping chamber. Providing a lid with an opening improves the simplicity with which expanded food can be removed from the popping chamber.

In a subsidiary aspect, said popper further comprises a hopper for collecting expanded food which has exited the popping chamber.

In a subsidiary aspect, said kettle is configured to pivot within the frame to facilitate removal of expanded food from said popping chamber. This configuration provides the advantage of being able to pivot the kettle to more straightforwardly fill, heat and empty the popping chamber. In particular, emptying the popping chamber, once food which is located inside has been expanded, is made easier so that the expanded food can be straightforwardly tipped or poured into a collecting vessel.

In a subsidiary aspect, said kettle is configured to rotate within said frame. A rotatable kettle further improves the ease with which the popping chamber can be filled, heated and emptied.

In a subsidiary aspect, said popper comprises at least an inlet for an expandable food and a separate inlet for introducing a heat transfer medium into the popping chamber. Separate inlets for an expandable food and for the heat transfer medium allows each to be more accurately measured so that optimum popping results can be achieved. Providing separate inlets also simplifies the means by which the food and heat transfer medium are introduced into the popping chamber.

In a subsidiary aspect, said heat transfer medium is oil-based. An oil-based heat transfer medium effectively transfers heat to the expandable food and also reduces the risk that the food will stick to the bottom surface of the popping chamber. This configuration also ensures that the maximum heat is transferred to the foodstuff because the oil-based heat transfer medium increases the surface area that heat is applied to.

In a subsidiary aspect, said gas burner is configured to process NOx. NOx, or nitric oxide/nitrogen dioxide, effectively transfers heat via the heat exchanger to the popping chamber. NOx is also not dangerous when ingested.

In a subsidiary aspect, the popper further comprises a heat control mechanism for controlling the level of heat transferred to said popping chamber. Controlling the level of heat transferred to the popping chamber via the heat control mechanism minimises the risk that food inside the popping chamber will be cooked/popped inappropriately. The heat control mechanism modulates the temperature within the popper rather than providing only an on/off heat function.

In a second broad independent aspect, the invention provides a method of popping an expandable food, comprising the steps of:
- providing a popper in accordance with any preceding aspect, comprising a kettle incorporating a popping chamber, one or more inlets for the introduction of an expandable food into said popping chamber, a burner, and a heat exchanger;
- firing said burner;
- allowing a hot medium to flow from said burner around said heat exchanger to heat said popping chamber;
- introducing an expandable food to be expanded into the popping chamber;
- heating the popping chamber until said food has expanded;
- removing the expanded food from said popping chamber;
- refilling said popping chamber with unexpanded expandable food.

This method is particular advantageous because it provides a method for popping an expandable food which has improved safety aspects and more effectively and efficiently expands food inside the popper.

In a subsidiary aspect, the method comprises the further step of pivoting the kettle of said popper prior to removing expanded food from said popping chamber. The step of pivoting the kettle prior to removing expanded food makes emptying the popper much easier and moves the kettle away from any hot components to minimise the risk that a person unloading the kettle could be burned.

In a subsidiary aspect, the method comprises the further steps of providing a heat control mechanism for controlling the level of heat transferred to said popping chamber; and adjusting the level of heat transferred to the popping chamber to optimise expandable food popping results.

In a third broad independent aspect, the invention provides an apparatus for heating a foodstuff comprising a kettle incorporating a heating chamber; one or more inlets for the introduction of a foodstuff into said heating chamber; the apparatus further comprising a burner for generating thermal energy, and the apparatus further comprising a heat exchanger for transferring said thermal energy to the heating chamber; and wherein the heat exchanger is configured to space apart the heating chamber from said burner; wherein said heat exchanger comprises a hot gas chamber; wherein said burner heats a gaseous medium which, in use, enters said hot gas chamber to heat the heating chamber.

### Brief Description of the Drawings

In the drawings:
Figure 1 shows a perspective view of part of a popper in accordance with a preferred embodiment.
Figure 2 shows another perspective view of a preferred embodiment.
Figure 3 shows a cross-sectional side view of a popper in accordance with a preferred embodiment.

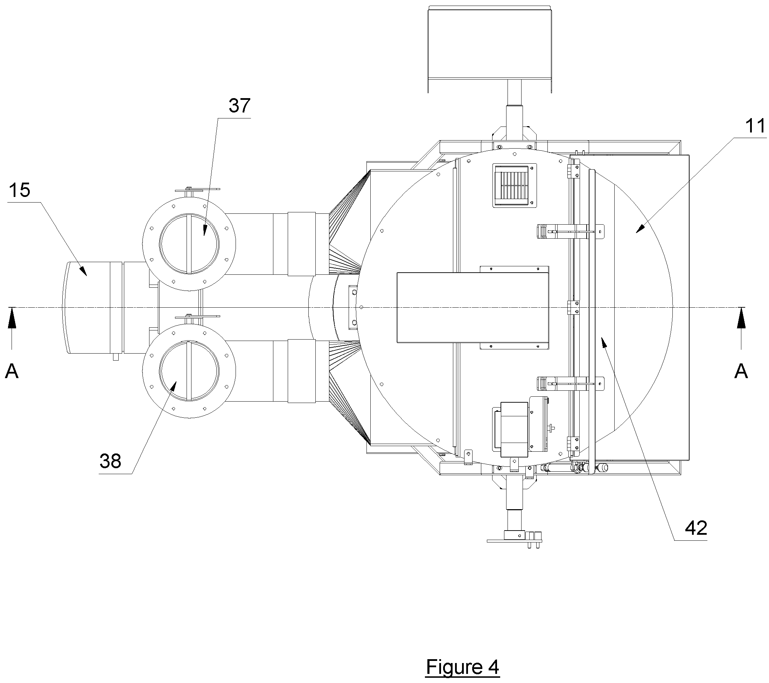

Figure 4 shows a plan view from above of a preferred embodiment.
Figure 5 shows a side view of a preferred embodiment comprising a frame and extractor lid.
Figure 6 shows another side view of the embodiment of Figure 5.
Figure 7 shows a perspective view of the embodiment of Figures 5 and 6.
Figure 8 shows a view from above of the embodiment of Figures 5 to 7.

### Detailed Description of the Embodiments

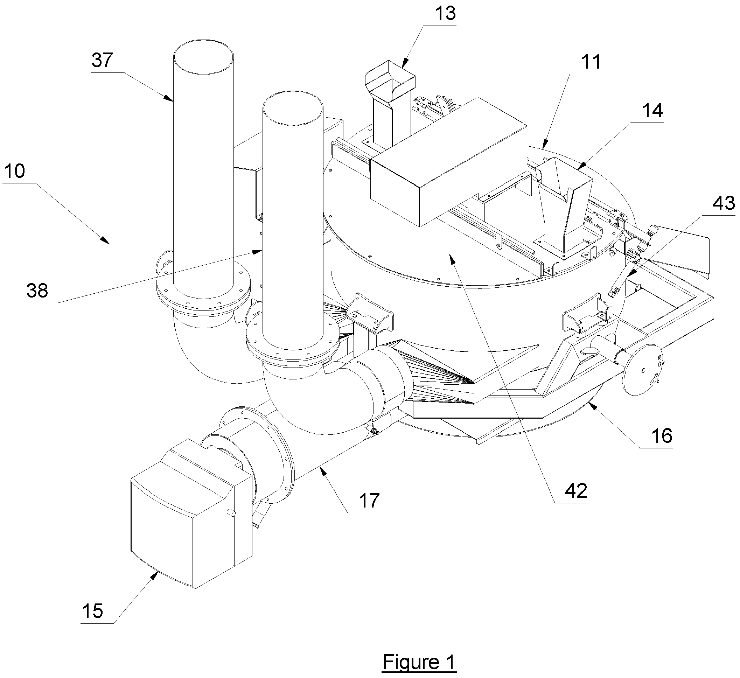

Figure 1 illustrates a perspective view of a popper in accordance with an embodiment of the invention, suitable for popping expandable foods, referenced generally as 10. The popper is also suitable for heating non-expandable foods. The popper 10 is structured and configured to provide a means for popping expandable foods which more effectively heats the expandable food and which has improved control to more effectively modulate the temperature level within the popper so that popping results are further improved. The popper 10 is also configured such that fuel burning component(s) and heat exchanger(s) are located remotely from the site of popping to minimise the risk of igniting heat transfer media at the point of popping.

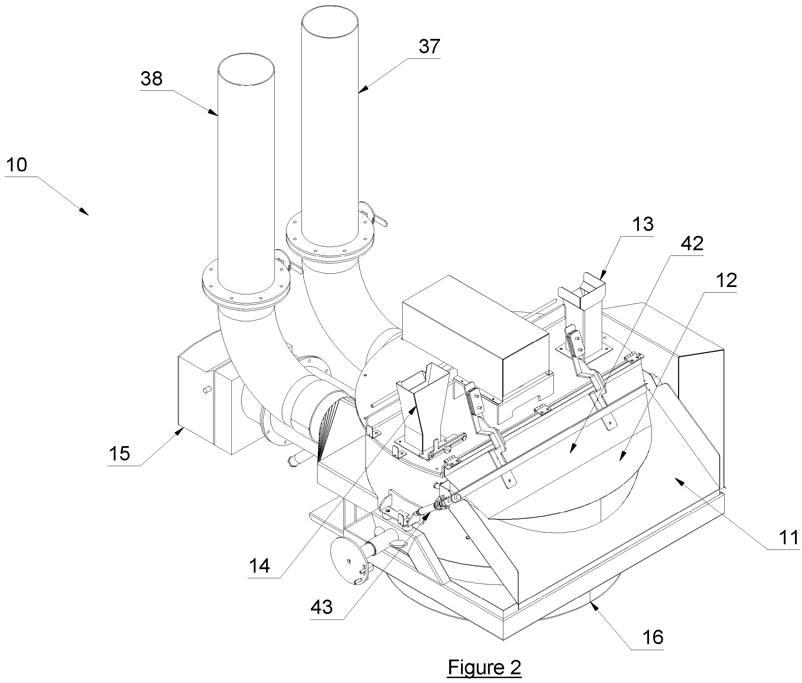

Referring to Figures 1 and 2, the popper 10 comprises a kettle 11 incorporating a popping chamber 12 which, in use, holds an expandable food to be heated and a heat transfer medium such as oil. Some food products may not require a heat transfer medium to be cooked and/or expanded. The popper 10 further comprises one or more inlets 13, 14 for the introduction of an expandable food (not shown) into the popping chamber 12. In a preferred embodiment, a heat transfer medium (not shown), such as oil, is also introduced into the popping chamber 12 prior to heating the expandable food. A burner 15 is provided to generate thermal energy for heating the popping chamber 12. Thermal energy generated by the burner 15 is transferred to the popping chamber 12 by a heat exchanger 16. In a preferred embodiment, the burner 15 is a gas burner. In alternative embodiments, the burner 15 may be configured to burn oil, coal or another fuel.

In the embodiments shown in the figures, the burner 15 is located remotely from the popping chamber to minimise the risk of igniting the heat transfer medium within the popping chamber 12. In other words, the heat exchanger 16 is configured to space apart the popping chamber 12 from the burner 15 such that the burner 15 is not in close proximity to the popping chamber 12. The flame of the burner 15 is therefore spaced from any heat transfer medium within the popping chamber 12. In one embodiment, the burner 15 is a gas burner and the gas burner processes NOx (nitic oxide, nitrogen dioxide).

In one embodiment, the heat exchanger 16 comprises a hot gas chamber and, more preferably, the hot gas chamber 16 is located at least substantially below the popping chamber 12. Even more preferably, the hot gas chamber 16 and popping chamber 12 have substantially the same diameter and the hot gas chamber 16 is located directly below the popping chamber 12. In use, the gas burner 15 produces exhaust gas which enters the hot gas chamber 16 to heat the popping chamber 12. The hot gas chamber 16 may comprise a number of baffles to control the flow of gas inside the hot gas chamber 16 and around the outside of the popping chamber 12. The heat exchanger 16 comprises a plate which is located, in a preferred embodiment, underneath the popping chamber 12 and transfers heat from the burner 15 to the popping chamber 12.

In one embodiment, the burner 15 is configured such that the top of the burner 15 is no higher than the bottom of the heat exchanger 16 which is below the kettle 11. In alternative embodiments, the burner 15 is located above the heat exchanger or in any other location relative to the heat exchanger 16 and kettle 11. In use, in a preferred embodiment, the burner 15 is fired prior to ingredients being added to the popping chamber 12. A pre-heat cycle may be set up to heat the burner 12 prior to introduction of the foodstuff, and heat may be increased once a foodstuff has been introduced to compensate for a drop in temperature inside the popping chamber 12.

In one embodiment, the popper 10 comprises a conduit 17 for transferring heat generated by the burner 15 to the popping chamber 12. In one embodiment, the conduit 17 comprises the flame tube. The flame tube holds the flame and transfers heat to the chamber of the heat exchanger 16 underneath the popping chamber 12.

The burner 15 is spaced apart from the popping chamber 12 such that the popping chamber 12 and any heat transfer medium which may be inside the popping chamber 12 is not in contact with the burner 15 in use and the risk of the heat transfer medium contacting either the heat exchanger 16 or burner 15 is minimised. The flame is contained in the flame tube 17, which prevents a flame contacting the underside of the popping chamber which would potentially create hot spots on the pan of the popping chamber 12.

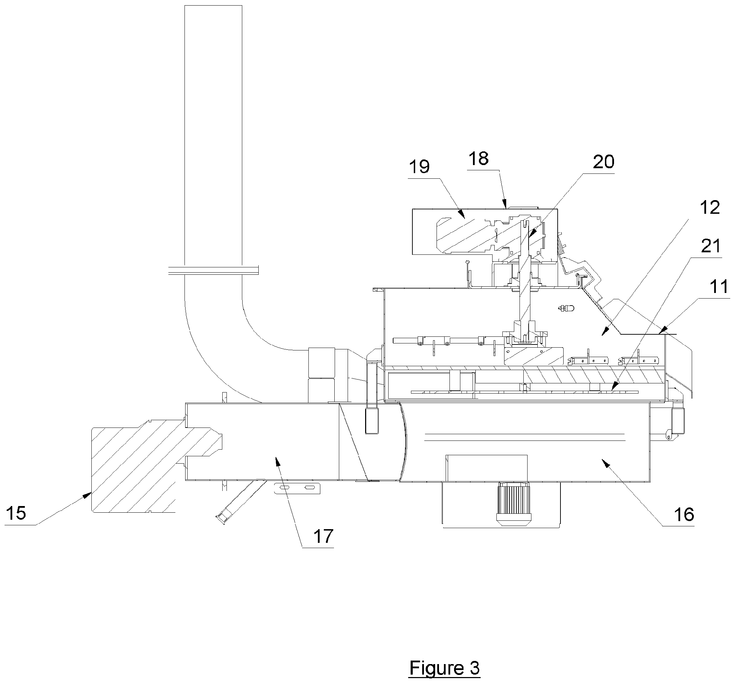

In a preferred embodiment, the burner 15 and heat exchanger 16 are connected and spaced apart by said flame tube 17. Preferably, the flame tube 17 is of such a length that the burner 15 is spaced apart from the heat exchanger 16 to the extent that the burner 15 is located outside the perimeter of the heat exchanger 16 and the popping chamber 12. Figure 3 most clearly shows this configuration, wherein the burner 15 is remotely located from the heat exchanger 16 and is separated by the flame tube 17 to the extent that the burner 15 is located well outside the perimeter of the heat exchanger 16 and popping chamber 15. The safety of the popper 10 is thereby improved. Maintenance and repair of the popper 10 is also improved because the burner 15 can be more straightforwardly removed from the popper 10 without having to dismantle the whole popper 10.

Still referring to Figure 3, it can be seen how the popping chamber 12, heat exchanger 16 and burner 15 are preferably arranged to maximise the efficiency with which heat is generated and transferred to the popping chamber 12 via the heat exchanger 16. In a preferred embodiment, the popping chamber 12 comprises a bottom surface incorporating a pan 21 which acts as a heating surface for the expandable food, e.g. popcorn kernels. Heat generated by the burner 15 is transferred via the heat exchanger 16, i.e. the hot gas chamber, through to the pan 21.

In one embodiment, the kettle 11 comprises two inlets 13, 14 into the popping chamber 12: a first inlet 13 configured for the introduction of an expandable food; and a second inlet 14 configured for the introduction of a heat transfer medium, such as oil, into the popping chamber 12. In an alternative embodiment, an expandable food and a heat transfer medium may be introduced into the popping chamber 12 via only a single inlet. Remote pumps and/or motors manage the doses inserted via the or each inlet via a conduit.

In one embodiment, the popper 10 further comprises one or more exhausts 37, 38, preferably two, for facilitating the removal of expended gas from the popper 10. In a preferred embodiment, the popper 10 comprises two exhausts for removing expended gas from two different temperature zones within the kettle 11. More than two exhausts may be provided in alternative embodiments, which may feed into a single (or more) channels outside of the kettle 11. In one embodiment, the heat exchanger 16 comprises a plurality of pathways, defined by tubes or similar, configured to circulate hot medium, such as gas from the gas burner 15 underneath and/or around the popping chamber 15. A plurality of exhausts is preferably provided and connected to each pathway to remove expended gas from each pathway.

The popper 10 further comprises, in one embodiment, an agitator 18 for agitating the expandable food inside the popping chamber 12. The agitator 18 may comprise part of the kettle 11 or may be a separate unit and is located adjacent to the popping chamber 12. The agitator 18 may be located above, below or to the side of the popping chamber 12. In a preferred embodiment, the agitator 18 comprises a motor 19 and a stirrer 20, wherein the motor 19 is located on top of the popping chamber 12 and the stirrer 20 extends from the motor 19, which drives the movement of the stirrer 20, down into the popping chamber through an opening. In use, the agitator 18 is preferably configured so that the stirrer extends substantially through the centre of a top surface of the popping chamber 12 and moves in a circular motion about a central axis of the popping chamber and within the radius of the popping chamber 12. It is preferred that the kettle 11, or at least the popping chamber 12 of the kettle 11, will have a circular diameter to allow effective agitation of the expandable food within the popping chamber 12. The stirrer 20 is preferably comprised of a non-scratch material. The stirrer comprises a shaft which rotates when actuated and a number of laterally extending arms which hold spatulas or other components which may be non-stick components for agitating the product.

In an alternative embodiment, another means of agitating the expandable food may be provided. In one such alternative embodiment, the agitator 18 comprises a vibrating means for shaking the popping chamber 12 to minimise the risk that the food will become stuck on the pan 21 of the popping chamber 12.

In a preferred embodiment, the kettle 11 comprises a lid 42 having an opening to allow expanded food to be emptied out of the popping chamber 12. The opening may be provided with a shutter to prevent food from exiting the popping chamber 12 during the heating cycle. In one embodiment, the lid 42 comprises an air system or other appropriate actuator which is configured to open the lid 42 at a given time to allow cooked or expanded food products out of the kettle 11. The lid 42 is also configured such that it opens by gravity when the kettle 11 is tipped. In an alternative embodiment, the lid 42 is provided with a funnel or sloped opening to allow popped food to exit the popping chamber 12 whilst the popping chamber 12 is heated to minimise the risk that expanded or popped food will be overcooked or burnt inside the popping chamber 12. A hopper (not shown) may be provided in one embodiment to collect expanded, or 'popped' food such as popped popcorn kernels.

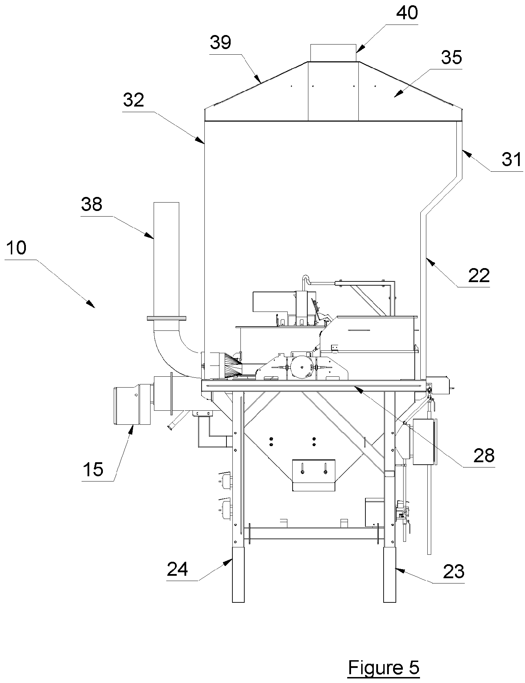

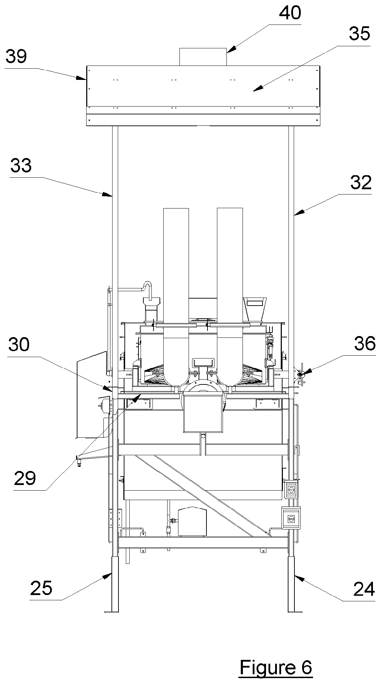

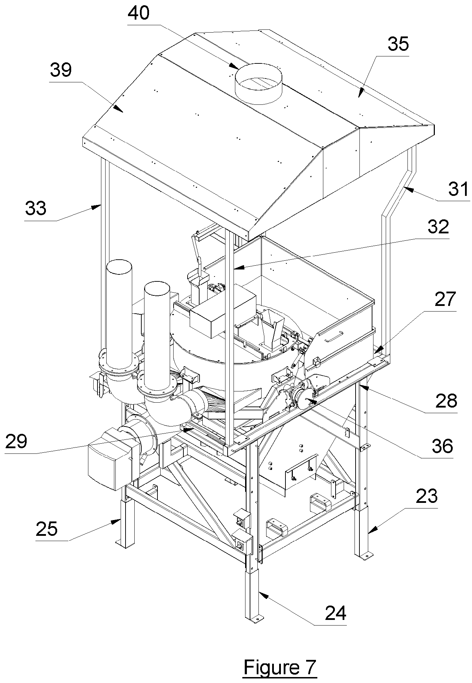

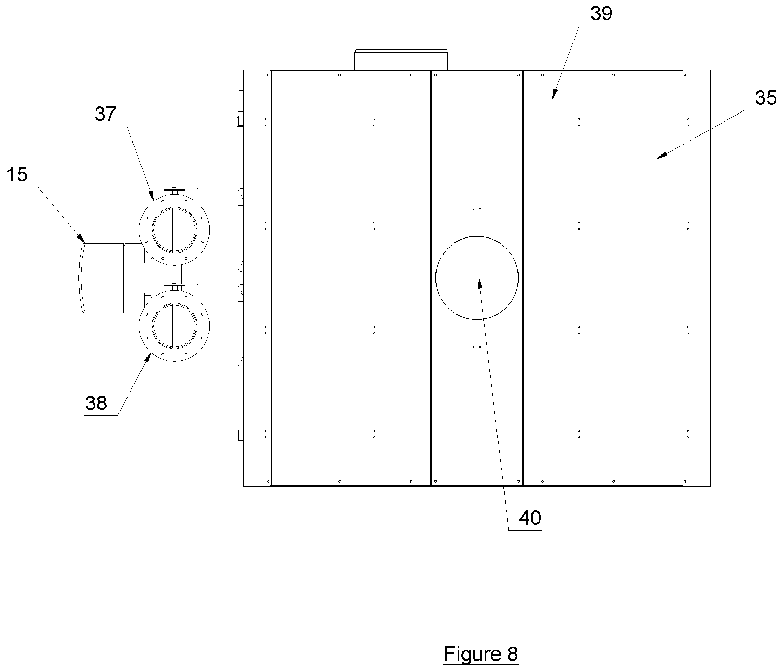

In the embodiment of Figures 5 to 8, the popper 10 further comprises a frame 22 which is connected to and houses the kettle 11, burner 15 and heat exchanger 16. In a preferred embodiment, the frame 22 comprises a number of legs, such as 23-25, and struts 27-30 for housing the other components of the popper 10. The frame 22 further comprises a number of arms 31-34 which extend from the struts 27-30 towards an extractor lid 35. The extractor lid 35 is configured to extract gas and/or vapour from the kettle 11, i.e. from cooking. The extractor lid 35 comprises a hood 39 and one or more ducts 40 for extracting the gas and/or vapour. The extractor lid 35 is preferably spaced from the top of the kettle 11 to allow easy access to the kettle 11. The popper 10 is effectively exposed rather than contained in a cabinet. Gases produced by the burner are, in a preferred embodiment, removed from the vicinity of the popper 10 via a separate exhaust system, which may be formed, at least in part, by the extractor lid 35.

In a preferred embodiment, the kettle 11 is configured to pivot and/or rotate within the frame 22 to facilitate use of the popper 10. For example, pivoting, or tilting, of the kettle 11 improves the ease with which expanded ('popped') food can be emptied from the popping chamber 12. For example, the kettle 11 may be pivoted to dump expanded contents into a hopper. A number of pivots, such as 36, are provided in an embodiment to facilitate pivoting of the kettle 11. The burner 15, heat exchanger 16 and exhausts 37, 38 may also pivot with the kettle 11. One or more motors (not shown) may be provided to drive the pivoting/rotation of the kettle 11 or other components of the popper 10. In an alternative embodiment, the kettle 11, burner 15 and heat exchanger 16 are free to pivot or rotate when actuated manually by an operator. A computerised system may be provided to automatically pivot or rotate the kettle 11, burner 15 and heat exchanger 16, or to assist semi-manual rotation/pivoting. Rotating or tipping of the kettle 11, burner 15 and heat exchanger 16 is preferably actuated by an electrical motor to provide smooth and controlled rotation/tipping. In alternative embodiments, hydraulic or manual operation is envisaged.

In a preferred embodiment, the popper 10 further comprises a heat control mechanism or unit (not shown) for accurately controlling the temperature level within the popper 10 so that popping results are optimised. This configuration provides improved results over on/off heat control mechanisms. A modulating burner 15 is provided to ensure that heat generated to heat the popping chamber 15 is even and appropriate for optimum results. The popper 10 may comprise a number of sensors or temperature gauges (not shown) for monitoring the temperature of each component of the popper 10, in particular the temperature inside the popping chamber 12.

In use, the burner 15 is fired to pass gas (or another heating medium) into the heat exchanger 16 and thereby heat the popping chamber 15. The heat exchanger 16 allows the heated medium, in the preferred embodiment hot gas, to flow around the popping chamber 12 and heat is transferred into the popping chamber 12 to heat the food mix (e.g. popcorn kernels and an oil-based heat transfer medium). An expandable food, such as popcorn kernels, is introduced into the popping chamber 12, preferably together with a heat transfer medium such as oil, plus any other required ingredients. The popping chamber 12 is subsequently heated, in a controlled manner by the heat control mechanism, until the food has expanded. The expanded food is then removed from the popping chamber via an opening in the lid 42 of the kettle 11 to a hopper or other collecting vessel, ready for further processing. The popper 10 is configured for use in large-scale production of popcorn for pre-packed products. Therefore, rapid popping, emptying and refilling of the popper 10 is desired to maximise the yield of the popper 10.

In a preferred embodiment, each of the components of the popper 10 is straightforwardly removable from the remainder of the popper to improve the ease with which the popper 10 can be maintained or repaired.

## Claims

1. A popper comprising a kettle incorporating a popping chamber; one or more inlets for the introduction of an expandable food into said popping chamber; the popper further comprising a burner for generating thermal energy, and the popper further comprising a heat exchanger for transferring said thermal energy to the popping chamber; and wherein the heat exchanger is configured to space apart the popping chamber from said burner; wherein said heat exchanger comprises a hot gas chamber; wherein said burner heats a gaseous medium which, in use, enters said hot gas chamber to heat the popping chamber.

2. A popper according to claim 1, wherein said burner is a gas burner.

3. A popper according to either claim 1 or claim 2, wherein said hot gas chamber is located at least substantially below said popping chamber.

4. A popper according to any of the preceding claims, wherein said burner is spaced from said hot gas chamber by a conduit and said conduit extends such that said gas burner is located outside the perimeter of the hot gas chamber and popping chamber.

5. A popper according to any one of the preceding claims, wherein said hot gas chamber comprises multiple temperature zones; and wherein the popper comprises at least two exhausts configured to remove gas from said multiple temperature zones.

6. A popper according to any one of the preceding claims, further comprising one or more of the following: a) an agitator for, in use, agitating the expandable food inside the popping chamber; b) a stirrer and a motor for actuating the movement of said stirrer inside the popping chamber; c) said kettle having a lid wherein said lid comprises an opening to enable the exit of an expanded food from the popping chamber; d) a hopper for collecting expanded food which has exited the popping chamber.

7. A popper according to any one of the preceding claims, wherein said popper further comprises a frame which is attached to and houses said kettle, burner and heat exchanger

8. A popper according to claim 7, wherein said frame comprises an extractor lid for extracting gas and/or vapour from the kettle.

9. A popper according to any one of the preceding claims, wherein said kettle is configured to pivot within the frame to facilitate removal of expanded food from said popping chamber.

10. A popper according to any one of the preceding claims, wherein said popper comprises at least an inlet for an expandable food and a separate inlet for introducing a heat transfer medium into the popping chamber.

11. A popper according to any one of the preceding claims, further comprising a heat control mechanism for controlling the level of heat transferred to said popping chamber.

12. A method of popping an expandable food, comprising the steps of:
• providing a popper in accordance with any one of the preceding claims, comprising a kettle incorporating a popping chamber, one or more inlets for the introduction of an expandable food into said popping chamber, a burner, and a heat exchanger having a hot gas chamber;
• firing said burner;
• allowing a hot gaseous medium to flow from said burner around said heat exchanger to heat said popping chamber;
• introducing an expandable food to be expanded into the popping chamber;
• heating the popping chamber until said food has expanded;
• removing the expanded food from said popping chamber;
• refilling said popping chamber with unexpanded expandable food.

13. A method in accordance with claim 12, comprising the further step of pivoting the kettle of said popper prior to removing expanded food from said popping chamber.

14. A method in accordance with either claim 12 or claim 13, comprising the further steps of providing a heat control mechanism for controlling the level of heat transferred to said popping chamber; and adjusting the level of heat transferred to the popping chamber to optimise expandable food popping results.

15. An apparatus for heating a foodstuff comprising a kettle incorporating a heating chamber; one or more inlets for the introduction of a foodstuff into said heating chamber; the apparatus further comprising a burner for generating thermal energy, and the apparatus further comprising a heat exchanger for transferring said thermal energy to the heating chamber; and wherein the heat exchanger is configured to space apart the heating chamber from said burner; wherein said heat exchanger comprises a hot gas chamber; wherein said burner heats a gaseous medium which, in use, enters said hot gas chamber to heat the heating chamber.
